# EUROPEAN PATENT APPLICATION

(11) **EP 2 072 310 A1**
(43) Date of publication of application: **24.06.2009**
(21) Application number: 07076102.8
(22) Date of filing: 18.12.2007
(51) Int. Cl.: B60K 6/22

(54) **An accessory drive system and use of an electromechanical converter**

(71) Applicant: Nederlandse Organisatie voor Toegepast- Natuurwetenschappelijk Onderzoek TNO, 2628 VK Delft (NL)
(72) Inventor: Foster, Darren Leigh, 2803 DK Gouda (NL)
(74) Representative: Hatzmann, Martin

(57) **Abstract**

The invention relates to an accessory drive system, comprising an electromechanical converter, in particular an electric variable transmission. The converter is provided with a primary shaft having a rotor mounted thereon, a secondary shaft having an interrotor mounted thereon and a stator, fixedly mounted to a housing of the electromechanical converter. Viewed from the primary shaft in radial direction, the rotor, the interrotor and the stator are arranged concentrically relative to each other. Further, one of the primary or the secondary shaft is arranged for coupling with an output shaft of an engine and the other of the primary or the secondary shaft is free of any vehicle drive line and is arranged for coupling to an input shaft of a mechanical accessory unit.

## Description

The invention relates to an accessory drive system, comprising an electromechanical converter, in particular an electric variable transmission, provided with a primary shaft having a rotor mounted thereon, a secondary shaft having an interrotor mounted thereon and a stator, fixedly mounted to a housing of the electromechanical converter, wherein, viewed from the primary shaft in radial direction, the rotor, the interrotor and the stator are arranged concentrically relative to each other, and wherein the rotor and the stator are designed with one or more windings, the interrotor forming one whole both mechanically and electromagnetically, being arranged as a conductor for the magnetic flux in an at least tangential direction.

Vehicle drive systems comprising a combustion engine are often equipped with mechanical accessory units, such as an air conditioning unit, a cooling fan, an oil pump, a water pump and/or a power steering unit. It is known from prior art systems to couple mechanical accessory units to the output crank shaft of the combustion engine.

A drawback of such a known vehicle drive system is that when the engine is switched off, the mechanical accessory units are also switched off. This is particularly disadvantageous during relatively long stops or repeated stops, e.g. when a vehicle driver is waiting before a traffic light.

Another drawback of such a known vehicle drive system is that the efficiency of the mechanical accessory unit can be low under certain circumstances because an input shaft speed of the accessory is directly related to the output crank shaft speed of the combustion engine.

Also in vehicles equipped with a combined combustion engine and an electrical engine drive system, a so-called hybrid vehicle, the mechanical accessory units are switched off when the combustion engine is off, not running, and only the electrical motor is active.

In the prior art, systems have been provided for hybrid vehicles to offer a mechanical accessory unit functionality when the combustion engine is off. The Japanese patent publication JP 2002 204 501 discloses a system in which the mechanical accessory units are coupled to a high voltage electrical drive system. A problem of such a system is that significant power loss occurs in the conversion of electrical energy towards mechanical energy. Further, the American patent publication US 2004/0221594 discloses a system in which the combustion engine is connected via a one-way clutch to an electrical motor for driving mechanical accessory units. If the combustion engine is off, the electrical motor can directly drive the mechanical accessory units. The speed of a mechanical accessory input shaft is not controlled as the speed of a mechanical driving system may vary significantly. In order to obtain a proper functioning of the mechanical accessory, a coupling between the driving system and the mechanical accessory input shaft is designed such that a sufficiently high input shaft speed is guaranteed, also at low speeds of the driving system. As a consequence, in a typical speed range of the driving system, the input shaft speed substantially exceeds a nominal speed required for proper functioning of the accessory. Therefore, the accessory is used inefficiently and energy is wasted. Further, the systems disclosed in JP '501 and US '594 are energy consuming and expensive.

Further, it is known to provide a vehicle provided with a temperature controlling system having reservoir comprising phase-change material serving as a temperature buffer to continue a temperature conditioning function when the engine is temporally switched off. Alternatively, a temperature controlling system can be applied based on temperature conditioning fluid or solid material. A temperature controlling system is e.g. known from EP 1424 531. However, the dimensions of the temperature controlled fluid reservoir are limited, so that merely relatively small spaces can be temperature controlled during a limited time period. Further, such systems are complex, expensive and less suitable for large mass produced vehicles.

It is noted that an electromechanical converter according to the opening paragraph is known from the International patent publication WO 03/075437 for empowering a driving mechanism of a vehicle.

An electric variable transmission (EVT) is an electromechanical converter with two mechanical ports, viz. a primary (driving) shaft and a secondary (driven) shaft, and an electric gate via which energy can be exchanged. If the electric gate is not used, the EVT works as a common infinitely variable transmission, where the transfer ratio has a very wide range. The EVT fulfills a function that is comparable to that of a combination of a clutch and a gearbox of a vehicle. In combination with the EVT, the combustion engine in fact works as a power source, whereby the speed can be set according to an optimum characteristic of the engine. The fuel consumption, the noise level and the emission of noxious gases from the vehicle can thus be reduced. Because the EVT is an infinitely variable transmission, there are no gearshifting shocks during acceleration. It also means that always acceleration with a constant (maximally permissible) power is possible, and not, as in a conventional gearbox, with a more or less sawtooth-shaped course of the power as a function of the time. With the same engine, the acceleration with an EVT therefore proceeds faster than with a conventional gearbox.

Conventionally, the voltage level that can be supplied to electrical system in a vehicle is limited by the battery type that is employed. In the use of the EVT, via power electronic converters, higher voltage levels can be simply created and the power is limited only by the combustion engine. This means that some auxiliary provisions that are conventionally directly driven by the engine, such as, for instance, the pump for the power steering, or the compressor in buses, can be driven electrically. They can then be switched on and off at will, so that the no-load losses are less.

However, since the energy path to the mechanical accessory unit comprises a number of energy conversion steps, the system is not energetically efficient. By alternatively driving a mechanical accessory unit directly by the interrotor of the electromechanical converter disclosed in WO '437, an energetically inefficient system is obtained as an accessory input shaft speed is directly related to the interrotor shaft speed which interrotor primarily drives the wheels of the vehicle.

It is an object of the present invention to provide an accessory drive system according to the opening paragraph wherein at least one of the above-mentioned disadvantages is counteracted. In particular, the present invention aims at providing an accessory drive system according to the opening paragraph providing an efficient operational behavior. To that end, according to the invention, one of the primary or the secondary shaft is arranged for coupling with an output shaft of an engine and the other of the primary or the secondary shaft is free of any vehicle drive line and is arranged for coupling to an input shaft of a mechanical accessory unit.

By coupling the electromechanical converter to an output shaft of an engine and to an input shaft of a mechanical accessory unit without driving a vehicle driving line, a more or less optimal shaft speed of the mechanical accessory unit can be obtained while maintaining an energetically efficient operation of the electromechanical converter. As a consequence, the overall performance of the electromechanical converter and the mechanical accessory unit can be set in an energetically efficient condition range, in principle independently of any vehicle drive speed.

Further, by controlling electrical currents flowing in the windings of the rotor and the stator, the mechanical accessory unit can be driven either by the engine, or by an electrical source, or by both. As a result, the mechanical accessory unit can maintain its function, also when the engine is switched off. The electrical source then can supply energy to the electromechanical converter when the motor is off for driving the mechanical accessory unit.

The invention further relates to a vehicle drive system comprising an accessory drive system.

The invention also relates to a use of an electromechanical converter.

The invention will now be further elucidated on the basis of an exemplary embodiment, as represented in the accompanying drawing, wherein
Fig. 1 shows a schematic view of an accessory drive system according to the invention, and
Fig. 2 shows a schematic view of an electric variable transmission for use in the accessory drive system of Fig. 1.

Corresponding parts in the figures are indicated with the same reference numerals where possible.

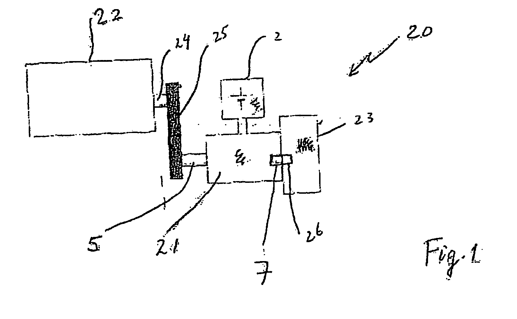

Fig. 1 schematically shows an accessory drive system 20 according to the invention, comprising an electromechanical converter 21. The converter is mechanically coupled to a combustion engine 22 of a vehicle and to a mechanical accessory unit 23. The mechanical accessory unit 23 is e.g. implemented as a pump of an air conditioning unit, a hydraulic pump or a power steering unit. However, also other mechanical accessory unit types can be applied, such as a turbo compressor.

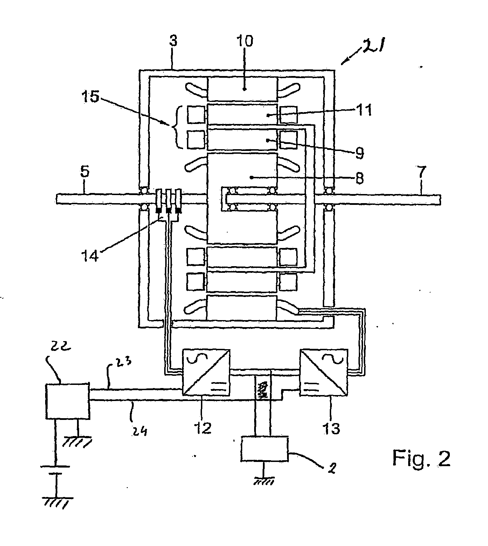

The basic structure of the electromechanical converter, an electric variable transmission (EVT) 21, is schematically represented in Fig. 2. The EVT 21 comprises a housing 3 in which a primary induction machine with a primary shaft 5 and a secondary induction machine with a secondary shaft 7 are arranged. The two shafts 5, 7 are bearing-mounted in the housing 3. The primary induction machine comprises a rotor 8 formed by a slip ring armature with an electrically accessible polyphase winding, and a non-electrically accessible cage armature 9. The secondary induction machine comprises a stationary part, the stator 10, fixedly connected with the housing 3, and a cage armature 11 mounted on the secondary shaft 7. The secondary shaft 7 of the secondary induction machine is also bearing mounted in the rotor 8. The stator 10 has an electrically accessible polyphase winding. Between the rotor 8 and the stator 10, electric energy can be exchanged via a control unit, which here comprises a first power electronic AC/DC converter 12 connected to rotor windings via a combination 14 of slip rings and brushes, and a second power electronic AC/DC converter 13, which are both designed as an alternating voltage-direct voltage inverter. The DC terminals of the two inverters 12, 13 are interconnected and connected to a DC storage energy system 2 comprised by the control unit, such as a battery or a supercap. The control unit comprises a controlling element 22 for controlling electrical currents flowing in the windings. Therefore, the controlling element 22 controls the inverters 12, 13 via data lines 23, 24. The primary and secondary induction cage armature 9, 11 jointly form an interrotor 15. The basis of the EVT is the primary induction machine which works as a regenerating electromagnetic clutch, enabling low loss speed ratio control. The secondary machine, which is fed by the regenerated energy from the primary machine, works as an auxiliary motor enabling torque multiplication.

In an embodiment according to an aspect of the invention, the interrotor comprises a magnetic and an electric circuit, the magnetic circuit including a magnetic flux conducting cylinder and the electric circuit including a number of electric circuit-forming windings extending in the flux conducting cylinder, and wherein the interrotor is arranged as a conductor for the magnetic flux in a tangential and radial direction so that exertion of a direct torque between the rotor and the stator can occur upon magnetic saturation of the interrotor.

The primary shaft 5 is coupled to the output shaft 24 of the combustion engine 22, while the secondary shaft 7 is coupled to the input shaft 26 of the mechanical accessory unit 23. More specifically, the primary shaft 5 is coupled to the output shaft 24 of the engine 22 via a transmission unit, such as a belt 25 or a gear transmission. The secondary shaft 7 is directly coupled to the input shaft 26 of the accessory unit 23. Obviously, the coupling of both the primary and secondary shaft 7 to the corresponding shaft can be performed either directly or indirectly by means of a transmission unit. As a result, during operation of the accessory drive system, the electromechanical converter 21 is driven by the engine 22 and does not drive any vehicle drive line, but drives a mechanical accessory unit 23 according to the invention. By exclusively driving a mechanical accessory unit any dependence between shaft speeds in a vehicle drive line and the input shaft of the mechanical accessory can substantially be avoided.

The accessory drive system 20 shown in Figure 1 forms part of a vehicle drive system wherein the combustion engine 22 drives a driving line of a vehicle.

The embodiment described referring to Fig. 1 is especially suitable for a mechanical accessory unit 23 requiring a relatively large torque at a relatively low shaft speed. Alternatively, if a mechanical accessory unit 23 requires a relatively high drive speed and a low torque, as is the case for e.g. a centrifugal compressor, the primary shaft 5 may in an advantageous manner be coupled to the input shaft 26 of the mechanical accessory unit 23 while the secondary shaft 7 is coupled to the output shaft 24 of the engine 22. In this way, the geometrical differences of sizes of the rotor and the interrotor are optimally exploited.

By arranging an electromechanical converter 21 between the motor 22 and the accessory unit 23, the input shaft drive speed of the accessory unit 23 can be set more or less independently of the motor drive speed resulting in a more efficient working point of the accessory unit under most circumstances.

By applying an electromechanical converter 21, the mechanical accessory unit 23 can be driven mechanically, electrically or mechanically and electrically in a combined manner, simultaneously. As an example, the accessory unit can be driven electrically when the engine 22 is switched off. The electrical DC storage system 2 then provides the power for driving the accessory unit 23. By driving the input shaft of the accessory unit both mechanically and electrically, an optimal driving state can be set from an energy point of view.

Further, the electrical buffer can store excess energy when the engine 22 produces more energy than is demanded by the mechanical accessory unit 23. Similarly, the electrical buffer 2 can provide additional energy to the electromechanical converter when the engine 22 produces less energy than is demanded by the mechanical accessory unit 23, e.g. when the engine is idle. By providing an electrical source 2 and/or by controlling a transmission ratio, an optimal working range of the rotor/interrotor speed ratio can be defined for the electromechanical converter.

In a preferred embodiment according to the invention, the rotor/interrotor speed ratio is approximately unity. The electromechanical converter then operates in an energetically efficient manner. In a further preferred embodiment according to the invention, the range of the rotor/interrotor speed ratio and the operation speed of the driven input shaft of the mechanical accessory unit are energetically optimized in combination, so that an energetically optimal operation status can be obtained. As an example, an optimal range of the rotor/interrotor speed ratio is set to values between 1:2 and 2:1, thereby including the status 1:1. Although in this exemplary case both the electromechanical converter and the mechanical accessory unit itself might work suboptimal, the accessory drive system as a whole runs efficient, due to the efficient working range of the EVT, thus resulting in saving of energy.

In a further preferred embodiment according to the invention, energy is supplied to the mechanical accessory unit substantially exclusively by the DC energy storage system 2 feeding the windings of the rotor and/or the stator, during a predetermined state of a vehicle wherein the engine is arranged, e.g. during an idle-stop modus or an e-drive modus in which modi the engine might be switched off. In an idle-stop modus, the engine 22 is switched off at short stops, such as traffic light stops or passenger drop-off stops. An e-drive modus is a status wherein a vehicle is driven by an electrical motor drive system forming part of a hybrid drive system. During the e-drive modus, the combustion engine also forming part of the hybrid drive system, can be switched off. Further, said predetermined state might also comprises a situation wherein the output crank shaft of the combustion engine has a relatively low speed, e.g. during a stop of the vehicle, or a situation wherein the combustion engine is running shorter than a predetermined time period. By supplying electrical energy to the mechanical accessory unit via the electromechanical converter, the function of the accessory can advantageously be offered and/or maintained.

When operating the accessory drive system, it is possible to generate more electrical power than is required for driving the accessory unit. As indicated above, the excess electrical power can e.g. be stored in the electrical buffer 22. The buffer can be coupled to an electrical system. In this way, the accessory drive system 21 can replace the vehicle's alternator.

The invention is not limited to the exemplary embodiments described herein. It will be clear to the person skilled in the art that many variants are possible.

It is noted that the primary or secondary shaft of the electromechanical converter coupled to an input shaft of a mechanical accessory unit can also be coupled to an input shaft of a further mechanical accessory unit. In general, the electromechanical converter can be arranged for driving a multiple number of mechanical accessory units.

Further, the accessory drive system according to the invention might optionally comprise a multiple number of electromechanical converters, each of them being driven by the output shaft of a single engine and driving one or more mechanical accessory units.

In addition, a vehicle drive system comprising an accessory drive system according to the invention might be provided with a separate electromechanical converter for driving a vehicle drive line. Of course, also other configurations are possible, e.g. a hybrid drive line.

It is further noted, that instead of applying polyphase windings in the rotor and the stator, monophase windings can be applied in the rotor and/or the stator.

Similarly, instead of using a combustion engine for driving the electromechanical converter, also another engine type can be used, e.g. a gas turbine.

It is also possible to design the interrotor otherwise, e.g. such that the interrotor does not comprise a pair of electrically inaccessible windings in a cage armature, but comprises a magnetic flux conducting cylinder, where on opposite sides thereof permanently magnetic material, for instance in the form of blocks, is arranged. Optionally, the permanently magnetic material is embedded. In another possible embodiment, the interrotor comprises a magnetic flux conducting cylinder, where on one side permanently magnetic material is applied and on the other side longitudinally extending grooves have been provided in which an electrically accessible winding has been arranged. In the latter case, however, it is to be ensured that a current supply point be present on the interrotor or on the secondary shaft; on the secondary shaft, slip rings can be easily mounted, via which current can be supplied or removed.

Other such variants will be obvious for the person skilled in the art and are considered to lie within the scope of the invention as formulated in the following claims.

## Claims

1. An accessory drive system, comprising an electromechanical converter, in particular an electric variable transmission, provided with a primary shaft having a rotor mounted thereon, a secondary shaft having an interrotor mounted thereon and a stator, fixedly mounted to a housing of the electromechanical converter, wherein, viewed from the primary shaft in radial direction, the rotor, the interrotor and the stator are arranged concentrically relative to each other, and wherein the rotor and the stator are designed with one or more windings, the interrotor forming one whole both mechanically and electromagnetically, being arranged as a conductor for the magnetic flux in an at least tangential direction, wherein one of the primary or the secondary shaft is arranged for coupling with an output shaft of an engine and the other of the primary or the secondary shaft is free of any vehicle drive line and is arranged for coupling to an input shaft of a mechanical accessory unit.

2. An accessory drive system according to claim 1, wherein the one or more windings of the rotor and/or the stator are of a mono- or polyphase type, and are electrically accessible.

3. An accessory drive system according to claim 1 or 2, wherein the interrotor further comprises a magnetic and an electric circuit, the magnetic circuit including a magnetic flux conducting cylinder and the electric circuit including a number of electric circuit-forming windings extending in the flux conducting cylinder, and wherein the interrotor is arranged as a conductor for the magnetic flux in a tangential and radial direction so that exertion of a direct torque between the rotor and the stator can occur upon magnetic saturation of the interrotor.

4. An accessory drive system according to any of the preceding claims, wherein electrically accessible windings of the rotor and/or the stator are connected to a control unit for controlling electrical currents flowing in the windings.

5. An accessory drive system according to any of the preceding claims, wherein the primary shaft is connected to the input shaft of the mechanical accessory unit.

6. An accessory drive system according to any of the preceding claims, wherein the mechanical accessory unit is a pump of an air conditioning system.

7. An accessory drive system according to any of the preceding claims, wherein the control unit comprises a first AC/DC invertor connected to rotor windings, a second AC/DC invertor connected to stator windings, a controlling element for controlling electrical currents flowing in the windings and a DC energy storage system connected to a DC terminal of the AC/DC inverter.

8. A vehicle drive system comprising an engine having an output shaft driving a driving line of a vehicle, the system further comprising an accessory drive system according to any of the previous claims, and a mechanical accessory unit unit having an input shaft, wherein the output shaft of the engine is coupled to the primary or secondary shaft of the electromechanical converter, and wherein the input shaft of the mechanical accessory unit unit is coupled to the secondary or primary shaft, respectively, of the electromechanical converter.

9. Use of an electromechanical converter, in particular an electric variable transmission, provided with a primary shaft having a rotor mounted thereon, a secondary shaft having an interrotor mounted thereon and a stator, fixedly mounted to a housing of the electromechanical converter, wherein, viewed from the primary shaft in radial direction, the rotor, the interrotor and the stator are arranged concentrically relative to each other, and wherein the rotor and the stator are designed with one or more windings, the interrotor forming one whole both mechanically and electromagnetically, being arranged as a conductor for the magnetic flux in an at least tangential direction, wherein one of the primary or the secondary shaft is coupled to an engine and wherein the other of the primary or secondary shaft is free of any vehicle drive line and is coupled to an input shaft of a mechanical accessory unit.

10. Use of an electromechanical converter according to claim 9, wherein energy is supplied to the mechanical accessory unit substantially exclusively by a DC energy storage system feeding the windings of the rotor and/or the stator, during a predetermined state of a vehicle wherein the engine is arranged.

11. Use of an electromechanical converter according to claim 9 or 10, wherein the rotor/interrotor speed ratio is approximately unity.

12. Use of an electromechanical converter according to any of the preceding claims 9-11, wherein the range of the rotor/interrotor speed ratio and the operation speed of the driven input shaft of the mechanical accessory unit are energetically optimized in combination.

13. Use of an electromechanical converter according to any of the preceding claims 9-12, wherein the input shaft of the mechanical accessory unit is driven mechanically and electrically in a combined manner, simultaneously.
